# EUROPÄISCHE PATENTSCHRIFT

(11) **EP 1 812 268 B1**
(45) Veröffentlichungstag und Bekanntmachung des Hinweises auf die Patenterteilung: **05.11.2014**
(21) Anmeldenummer: 05792049.8
(22) Anmeldetag: 16.09.2005
(51) Int. Cl.: B60R 22/48

(54) **SERVICE- UND/ODER ÜBERWACHUNGSEINRICHTUNG ZUR ANBRINGUNG AN EINEM AUF EINE WELLE EINES RETRAKTORS AUF- UND VON DIESER WELLE ABROLLBAREN GURT, INSBESONDERE SICHERHEITSGURT EINES KRAFTFAHRZEUGS**
SERVICE AND/OR MONITORING DEVICE TO BE MOUNTED ON A BELT, ESPECIALLY SAFETY BELT OF A MOTOR VEHICLE, THAT CAN BE WOUND ONTO A SHAFT OF A RETRACTOR AND UNWOUND FROM SAID SHAFT
DISPOSITIF D'ENTRETIEN ET/OU DE SURVEILLANCE DESTINE A ETRE MONTE SUR UNE CEINTURE, NOTAMMENT UNE CEINTURE DE SECURITE D'UN VEHICULE AUTOMOBILE, POUVANT ETRE ENROULEE SUR UN ARBRE D'UN ENROULEUR ET DEROULEE A PARTIR DUDIT ARBRE

(30) Priorität: 17.11.2004 DE 102004055396
(43) Veröffentlichungstag der Anmeldung: 01.08.2007
(73) Patentinhaber: paragon AG, 33129 Delbrück (DE)
(72) Erfinder: RODEMER, Klaus, 36369 Lautertal (DE)
(74) Vertreter: Lelgemann, Karl-Heinz
(86) Internationale Anmeldenummer: PCT/EP2005/009958
(87) Internationale Veröffentlichungsnummer: WO 2006/053600

(56) Entgegenhaltungen:
- EP-A- 1 312 514
- WO-A-94/22693
- DE-A1- 4 028 271
- DE-A1- 10 136 267
- FR-A- 2 846 925
- GB-A- 2 153 203
- PATENT ABSTRACTS OF JAPAN Bd. 2000, Nr. 20, 10. Juli 2001 (2001-07-10) & JP 2001 071862 A (FUSHIMI MAREZO; HOSHI MASANORI; TEZUKA MASASHIGE), 21. März 2001 (2001-03-21)

## Beschreibung

Die Erfindung bezieht sich auf einen Sicherheitsgurt eines Kraftfahrzeugs nach dem Oberbegriff des Patentanspruchs 1.

Aus der EP 1 172 258 A1 ist ein Sicherheitsgurt eines Kraftfahrzeugs mit einer der Steuerung einer Freisprechmikrofonhalterung dienenden Service- und/oder Überwachungseinrichtung bekannt, bei der am Sicherheitsgurt Mikrofone angebracht sind, wobei in Abhängigkeit von der Auszuglänge des Sicherheitsgurts sowie ggf. weiterer Parameter mittels der Einrichtung eine Auswahl getroffen wird, welche der einzelnen Mikrofone der Freisprecheinrichtung eingeschaltet sind. Hierzu dient eine Auswählschaltung, an die die einzelnen Mikrofone angeschlossen sind. Die Auswahl erfolgt in Abhängigkeit von der Positionierung der am Sicherheitsgurt angebrachten Mikrofone in Bezug auf die durch den betreffenden Sicherheitsgurt gesicherte Person.

Zur Erfassung der jeweils aktuellen Auszuglänge des Sicherheitsgurts ist bei der Service- und/oder Überwachungseinrichtung vorgesehen, die Gurtauszuglänge durch Abtastung des Gurtrollendurchmessers zu ermitteln. Alternativ soll eine rein elektronische Umdrehungswinkelmessung der Gurtrolle denkbar sein.

Aus der DE 101 36 267 A1 ist ein Sicherheitsgurt eines Kraftfahrzeugs bekannt, der auf einer Abgabe-/Aufnahmegurtrolle auf- und hiervon abrollbar ist. Zu der Service- und/oder Überwachungseinrichtung des Sicherheitsgurts gehören ein Sensor, der auf einer Seite des Sicherheitsgurts angeordnet ist, und ein Magnet, der auf der anderen Seite des Sicherheitsgurts angeordnet ist. Der Sicherheitsgurt ist in Bezug sowohl auf den Sensor als auch auf den Magneten beweglich. Eine Sensorschalteinrichtung des bekannten Sicherheitsgurts wird komplettiert durch ferromagnetische Bandelemente, die fest am Sicherheitsgurt angebracht sind und die das Ausgangssignal der aus dem Magneten und dem Sensor gebildeten Sensorschalteinrichtung beeinflussen. Im gezeigten Ausführungsbeispiel ist die aus dem Sensor und dem Magneten gebildete Sensorschalteinrichtung nahe der Abgabe-/Aufnahmegurtrolle angeordnet. Sie kann jedoch auch an dieser Rolle vorgesehen sein. Alternativ ist eine Ausgestaltung der Service- und/oder Überwachungseinrichtung möglich, bei der die Sensorschalteinrichtung durch lichtemittierende Dioden und optische Sensoren gebildet wird, wobei als fest am Sicherheitsgurt angeordnete Teile Fenster vorgesehen sind.

Ausgehend von dem vorstehend geschilderten Stand der Technik liegt der Erfindung die Aufgabe zugrunde, den gattungsgemäßen Sicherheitsgurt eines Kraftfahrzeugs derart weiterzubilden, dass er in konstruktiv-technisch weniger aufwendiger Weise realisierbar ist.

Diese Aufgabe wird erfindungsgemäß durch die Merkmale im kennzeichnenden Teil des Patentanspruchs 1 gelöst. In Abhängigkeit davon, ob sich das Sensorelement in dem mittels der Sensorschalteinrichtung durchgeschalteten Zustand befindet, lässt sich erfassen, ob und wie weit der Gurt bzw. Sicherheitsgurt von der Welle des Retraktors abgerollt ist.

Bei einer Ausgestaltung der Service- und/oder Überwachungseinrichtung des erfindungsgemäßen Sicherheitsgurts als Gurtanlagesicherung, wobei bei von der Welle des Retraktors entferntem, nicht durchgeschaltetem Sensorelement ein das Anlegen des Gurtes bzw. Sicherheitsgurtes bestätigendes Signal erzeugbar ist, kann mittels dieses Signals sichergestellt werden, dass entweder der betreffende Kraftfahrzeuginsasse durch ein optisches oder akustisches Signal auf die Tatsache aufmerksam gemacht wird, dass der Gurt bzw. Sicherheitsgurt nicht angelegt ist, oder es kann durch einen auf das entsprechende Signal erfolgenden Eingriff in die Motorsteuerung verhindert werden, dass das Kraftfahrzeug in Betrieb genommen wird, wenn nicht der Gurt bzw. Sicherheitsgurt noch angelegt wird.

Bei einer Ausgestaltung der Service- und/oder Überwachungseinrichtung als Mikrofoneinrichtung mit zumindest zwei separat aktivierbaren Mikrofonen, die in Längsrichtung des Gurts mit Abstand zueinander am Gurt angeordnet sind, kann je nach Auszuglänge des Gurts bzw. Sicherheitsgurts vom Retraktor dasjenige Mikrofon der Mikrofoneinrichtung aktiviert werden, welches bei der entsprechenden Auszuglänge optimal angeordnet ist, wobei der hierfür zu betreibende technisch-konstruktive Aufwand möglichst gering ist. Die Auswahl des jeweils am besten geeigneten Mikrofons erfolgt dann in Abhängigkeit vom Schaltzustand des Sensorelements, wobei bei an der Welle des Retraktors befindlichem, mittels der Sensorschalteinrichtung durchgeschaltetem Sensorelement das erste und bei von der Welle des Retraktors entferntem, nicht durchgeschaltetem Sensorelement das zweite Mikrofon der Mikrofoneinrichtung aktiviert ist. Je nach Auszuglänge des Sicherheitsgurts vom Retraktor ist somit das für die entsprechende Auszuglänge optimale Mikrofon der Mikrofoneinrichtung aktiviert. Sofern lediglich zwei Mikrofone zur Mikrofoneinrichtung gehören, ist hierfür lediglich eine Sensorschalteinrichtung und ein einziges Sensorelement erforderlich.

Falls wie bei modernen derartigen Mikrofoneinrichtungen beispielsweise drei Mikrofone vorgesehen sind, sind zweckmäßigerweise zwei Sensorelemente vorhanden, die in Längsrichtung des Gurts mit Abstand zueinander am Gurt angeordnet sind, wobei bei auf der Welle des Retraktors aufgerolltem Gurt und mittels der Sensorschalteinrichtung durchgeschalteten beiden Sensorelementen das erste, bei teilweise von der Welle des Retraktors abgerolltem Gurt, von der Welle des Retraktors entferntem, nicht durchgeschaltetem einen Sensorelement und an der Welle des Retraktors befindlichem, mittels der Sensorschalteinrichtung durchgeschaltetem anderen Sensorelement das zweite und bei zumindest teilweise von der Welle des Retraktors abgerolltem Gurt und von der Welle des Retraktors entfernten, nicht durchgeschalteten beiden Sensorelementen das dritte Mikrofon der Mikrofoneinrichtung aktiviert ist. Bei dieser Ausführungsform sind drei unterschiedliche Stadien unterscheidbar, nämlich Stadium 1, bei dem beide Sensorelemente durchgeschaltet sind, Stadium 2, bei dem das erste Sensorelement nicht durchgeschaltet und das zweite Sensorelement durchgeschaltet ist, und Stadium 3, bei dem beide Sensorelemente nicht mehr durchgeschaltet sind. In jedem Stadium wird ein bestimmtes Mikrofon der Mikrofoneinrichtung aktiviert, wobei die jeweils anderen Mikrofone der Mikrofoneinrichtung nicht aktiviert sind.

Die Sensorschalteinrichtung lässt sich in besonders vorteilhafter Weise als Magnet ausgestalten, wobei dann zweckmäßigerweise die Sensorelemente als Hallsensoren ausgebildet werden können.

Derartige Hallsensoren können ohne großen Aufwand auf die Oberfläche des Gurts, vorzugsweise innerhalb eines automatisierten Fertigungsprozesses desselben, aufgebracht werden.

Die Hallsensoren können in Zweidrahttechnik ausgebildet sein. Darüber hinaus ist es möglich, Leitfäden der Hallsensoren flexibel auszugestalten und in den Gurt einzuweben.

Die Leitfäden können an einem Endbeschlag des Gurts über ein Kabel bzw. einen Stecker ausgeschleust werden.

Zu der Service- und/oder Überwachungs- bzw. Mikrofoneinrichtung gehört zweckmäßigerweise eine Logikschaltung, mittels der der durchgeschaltete bzw. nicht durchgeschaltete Zustand des bzw. der Sensorelemente erfassbar ist, woraufhin dann je nach erfassten Schaltzuständen des bzw. der Sensorelemente das entsprechende Mikrofon mittels der Logikschaltung aktiviert werden kann.

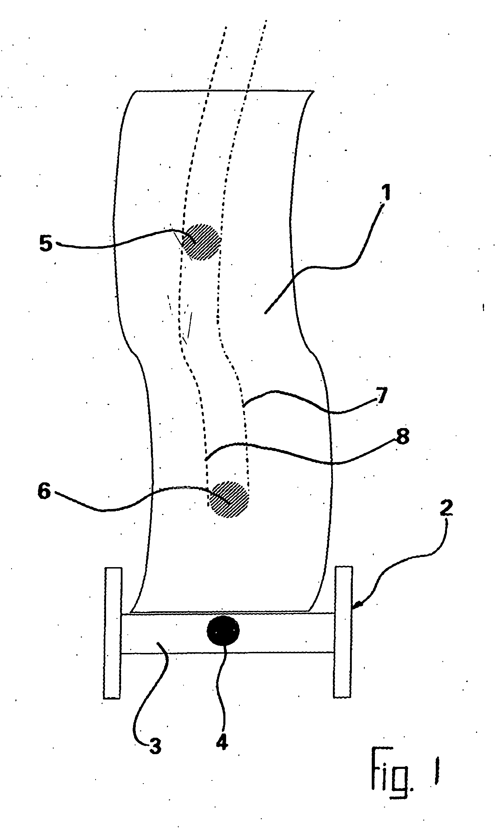

Im Folgenden wird die Erfindung anhand einer Ausführungsform unter Bezugnahme auf die Zeichnung näher erläutert, in deren einziger Figur für die vorliegende Erfindung wesentliche Elemente einer als Mikrofoneinrichtung ausgebildeten Service- und/oder Überwachungseinrichtung eines erfindungsgemäßen Sicherheitsgurts dargestellt sind.

Eine an einem Sicherheitsgurt 1 eines Kraftfahrzeugs zum Einsatz kommende Mikrofoneinrichtung hat zumindest zwei, im dargestellten Ausführungsbeispiel drei in der einzigen Figur nicht dargestellte Mikrofone. Die drei Mikrofone sind in Längsrichtung des Sicherheitsgurts 1 zueinander beabstandet an diesem angeordnet.

Zu dem Sicherheitsgurt 1 gehört ein Retraktor 2 mit einer Welle 3, auf die der Sicherheitsgurt 1 aufroll- und von der der Sicherheitsgurt 1 abrollbar ist.

Wenn der Sicherheitsgurt 1 - soweit möglich - auf die Welle 3 des Retraktors 2 aufgerollt ist, ist ein dann optimal angeordnetes Mikrofon der Mikrofoneinrichtung aktiviert. Je nach Auszuglänge des Sicherheitsgurts 1 vom Retraktor 2 sind weitere Mikrofone der in der einzigen Figur nicht gezeigten Mikrofoneinrichtung aktiviert.

Zur Aktivierung der Mikrofone der Mikrofoneinrichtung dient eine im dargestellten Ausführungsbeispiel als Magnet 4 ausgebildete Sensorschalteinrichtung, Der Magnet 4 ist im dargestellten Ausführungsbeispiel der Mikrofoneinrichtung in bzw. auf der Welle 3 des Retraktors 2 des Sicherheitsgurts 1 angeordnet. Mit dem Magneten 4 zusammen wirken zwei im dargestellten Ausführungsbeispiel der Mikrofoneinrichtung als Hallsensoren 5, 6 ausgebildete Sensorelemente. Die beiden Hallsensoren 5, 6 sind in Längsrichtung des Sicherheitsgurts 1 zueinander beabstandet auf der Oberfläche des Sicherheitsgurts 1 aufgebracht. Das Aufbringen der Hallsensoren 5, 6 auf die Oberfläche des Sicherheitsgurts erfolgt vorzugsweise innerhalb eines automatischen Fertigungsprozesses. Die Hallsensoren 5, 6 sind im dargestellten Ausführungsbeispiel in Zweidrahttechnik ausgeführt und über Leitfäden 7, 8, die flexibel und in den Sicherheitsgurt 1 eingewoben und an einem Endbeschlag des Sicherheitsgurts 1 über ein Kabel bzw. einen Stecker aus dem Sicherheitsgurt 1 ausgeschleust sind, an eine in der einzigen Figur nicht gezeigte Logikschaltung angeschlossen.

Wenn sich die beiden Hallsensoren 5, 6 bei - soweit möglich - auf die Welle 3 des Retraktors 2 aufgerolltem Zustand des Sicherheitsgurts 1 nahe dem Magneten 4 befinden, sind die beiden Hallsensoren 5, 6 durchgeschaltet. Im durchgeschalteten Zustand der beiden Hallsensoren 5, 6 wird das dann optimal angeordnete Mikrofon der Mikrofoneinrichtung durch die Logikschaltung aktiviert.

Wenn der Sicherheitsgurt um eine vorgebbare erste Auszuglänge von der Welle 3 des Retraktors 2 abgerollt wird, hebt der in der einzigen Figur obere Hallsensor 5 von der Welle 3 ab und entfernt sich somit vom Magneten 4. Hierdurch gerät der Hallsensor 5 aus seinem mittels des Magneten 4 durchgeschalteten in einen nicht durchgeschalteten Zustand. Mittels des Magneten 4 durchgeschaltet verbleibt der in der einzigen Figur untere Hallsensor 6. In der Logikeinheit wird der durchgeschaltete Zustand des Hallsensors 6 und der nicht durchgeschaltete Zustand des Hallsensors 5 erfasst, woraufhin mittels der Logikeinheit das zweite Mikrofon der Mikrofoneinrichtung aktiviert wird, welches ab der beim definierten Abheben des ersten Hallsensors 5 von der Welle 3 vorliegenden Auszuglänge des Sicherheitsgurts 1 optimal angeordnet ist.

Wenn der Sicherheitsgurt 1 weiter von der Welle 3 des Retraktors 2 abgerollt wird und eine weitere vorgebbare Auszuglänge übertrifft, bei der der in der einzigen Figur untere Hallsensor 6 sich von der Welle 3 abhebt und damit vom Magneten 4 entfernt, gerät auch der zweite Hallsensor 6 aus seinem mittels des Magneten 4 durchgeschalteten in seinen nicht durchgeschalteten Zustand. Nunmehr sind beide Hallsensoren 5, 6 nicht mehr durchgeschaltet. Die einzige Figur zeigt diesen Zustand, bei dem sich beide Hallsensoren 5, 6 von der Welle 3 abgehoben und damit vom Magneten 4 entfernt haben. Der nicht mehr durchgeschaltete Zustand beider Hallsensoren 5, 6 wird in der in der einzigen Figur nicht gezeigten Logikeinheit erfasst, woraufhin mittels der Logikeinheit ein drittes Mikrofon der Mikrofoneinrichtung aktiviert wird. Dieses dritte Mikrofon ist so am Sicherheitsgurt 1 angeordnet, dass es ab derjenigen Auszuglänge, bei der sich der zweite Hallsensor 6 von der Welle 3 abhebt und damit vom Magneten 4 entfernt, optimal angeordnet ist.

Bei der Aufrollbewegung des Sicherheitsgurts 1 auf die Welle 3 des Retraktors 2 werden die sich dann ergebenden Schaltzustände der Hallsensoren 6, 5 ebenfalls in der Logikeinheit erfasst, woraufhin - je nach Schaltzustand der Hallsensoren 5, 6 - die entsprechenden Mikrofone der Mikrofoneinrichtung aktiviert werden.

Die Mikrofone der Mikrofoneinrichtung sind separat aktivierbar, wobei vorzugsweise je Schaltzustand nur ein Mikrofon aktiviert ist.

## Patentansprüche

1. Sicherheitsgurt (1) eines Kraftfahrzeugs, der auf eine Welle (3) eines Retraktors (2) auf- und von dieser Welle (3) abrollbar ist und eine Service- und/oder Überwachungseinrichtung aufweist, die eine als Sensorschalteinrichtung (4) ausgebildete Sensoreinrichtung (4), die in unmittelbarer Nähe bei, an, in oder auf der Welle (3) des Retraktors (2) angeordnet ist, und zumindest ein Sensorelement (5, 6) aufweist, das am Sicherheitsgurt (1) angeordnet ist, **dadurch gekennzeichnet, dass** das zumindest eine Sensorelement (5, 6) mittels der Sensorschalteinrichtung (4) durchschaltbar ist, wenn sich das zumindest eine Sensorelement (5, 6) bei soweit wie möglich auf die Welle (3) des Retraktors (2) aufgerolltem Zustand des Sicherheitsgurts (1) nahe der Sensorschalteinrichtung (4) befindet.

2. Sicherheitsgurt (1) nach Anspruch 1, dessen Service- und/oder Überwachungseinrichtung als Gurtanlagesicherung ausgebildet ist, wobei bei von der Welle (3) des Retraktors (2) entferntem, nicht durchgeschaltetem Sensorelement (5, 6) ein das Anlegen des Gurtes (1) bestätigendes Signal erzeugbar ist.

3. Sicherheitsgurt (1) nach Anspruch 1, dessen Service- und/oder Überwachungseinrichtung als Mikrofoneinrichtung ausgebildet ist, mit zumindest zwei separat aktivierbaren Mikrofonen, die in Längsrichtung des Gurts (1) mit Abstand zueinander am Gurt (1) angeordnet sind, wobei bei an der Welle (3) des Retraktors (2) befindlichem, mittels der Sensorschalteinrichtung (4) durchgeschaltetem Sensorelement (5, 6) das erste und bei von der Welle (3) des Retraktors (2) entferntem, nicht durchgeschaltetem Sensorelement (5, 6) das zweite Mikrofon der Mikrofoneinrichtung aktiviert ist.

4. Sicherheitsgurt (1) nach Anspruch 3, dessen Service- und/oder Überwachungseinrichtung drei Mikrofone und zwei Sensorelemente (5, 6) aufweist, die in Längsrichtung des Gurts (1) mit Abstand zueinander am Gurt (1) angeordnet sind, wobei bei auf der Welle (3) des Retraktors (2) aufgerolltem Gurt (1) und mittels der Sensorschalteinrichtung (4) durchgeschalteten beiden Sensorelementen (5, 6) das erste, bei teilweise von der Welle (3) des Retraktors (2) abgerolltem Gurt (1), von der Welle (3) des Retraktors (2) entferntem, nicht durchgeschaltetem einem Sensorelement (5) und an der Welle (3) des Retraktors (2) befindlichem, mittels der Sensorschalteinrichtung (4) durchgeschaltetem anderen Sensorelement (6) das zweite und bei zumindest teilweise von der Welle des Retraktors (2) abgerolltem Gurt (1) und von der Welle (3) des Retraktors (2) entfernten, nicht durchgeschalteten beiden Sensorelementen (5, 6) das dritte Mikrofon der Mikrofoneinrichtung aktiviert ist.

5. Sicherheitsgurt (1) nach einem der Ansprüche 1 bis 4, bei dem die Sensorschalteinrichtung (4) der Service- und/oder Überwachungseinrichtung als Magnet ausgebildet ist.

6. Sicherheitsgurt (1) nach einem der Ansprüche 1 bis 5, bei dem die Sensorelemente (5, 6) der Service- und/oder Überwachungseinrichtung als Hallsensoren ausgebildet sind.

7. Sicherheitsgurt (1) Anspruch 6, bei dem die Hallsensoren (5, 6) der Service- und/oder Überwachungseinrichtung auf die Oberfläche des Gurts (1), vorzugsweise innerhalb eines automatisierten Fertigungsprozesses desselben, aufgebracht sind.

8. Sicherheitsgurt (1) nach Anspruch 6 oder 7, bei dem die Hallsensoren (5, 6) der Service- und/oder Überwachungseinrichtung in Zweidrahttechnik ausgebildet sind.

9. Sicherheitsgurt (1) nach einem der Ansprüche 6 bis 8, bei dem Leitfäden (7, 8) der Hallsensoren (4, 5) der Service- und/oder Überwachungseinrichtung flexibel und in den Gurt (1) eingewoben sind.

10. Sicherheitsgurt (1) nach Anspruch 9, bei dem die Leitfäden (7, 8) der Hallsensoren (4, 5) der Service- und/oder Überwachungseinrichtung an einem Endbeschlag des Gurts (1) über ein Kabel bzw. einen Stecker ausgeschleust sind.

11. Sicherheitsgurt (1) nach einem der Ansprüche 3 bis 10, dessen Service- und/oder Überwachungseinrichtung eine Logikschaltung aufweist, mittels der der durchgeschaltete bzw. nicht durchgeschaltete Zustand des bzw. der Sensorelemente (5, 6) erfassbar und das dem jeweiligen Schaltzustand des bzw. der Sensorelemente (5, 6) entsprechende Mikrofon aktivierbar ist.

## Claims

1. A safety belt (1) of a motor vehicle, which is able to be wound onto a shaft (3) of a retractor (2) and unwound from this shaft (3) and has a service and/or monitoring device, which has a sensor device (4), constructed as a sensor switching device (4), which is arranged in the immediate vicinity near, at, in or on the shaft (3) of the retractor (2), and at least one sensor element (5, 6), which is arranged on the safety belt (1), **characterized in that** the at least one sensor element (5, 6) is able to be connected through by means of the sensor switching device (4), when the at least one sensor element (5, 6) is situated close to the sensor switching device (4) with the safety belt (1) in a state wound as far as possible onto the shaft (3) of the retractor (2).

2. The safety belt (1) according to Claim 1, the service and/or monitoring device of which is constructed as a safety device for the putting on of the belt, wherein in the case of a sensor element (5, 6) which is remote from the shaft (3) of the retractor (2) and is not connected through, a signal is able to be generated, confirming the putting on of the belt (1).

3. The safety belt (1) according to Claim 1, the service and/or monitoring device of which is constructed as a microphone device, with at least two separately activatable microphones, which are arranged in longitudinal direction of the belt (1) at a distance from one another on the belt (1), wherein in the case of a sensor element (5, 6) situated on the shaft (3) of the retractor (2) and connected through by means of the sensor switching device (4), the first microphone of the microphone device is activated and in the case of a sensor element (5, 6) remote from the shaft (3) of the retractor (2) and not connected through, the second microphone of the microphone device is activated.

4. The safety belt (1) according to Claim 3, the service and/or monitoring device of which has three microphone and two sensor elements (5, 6), which are arranged in longitudinal direction of the belt (1) at a distance from one another on the belt (1), wherein in the case of a belt (1) wound on the shaft (3) of the retractor (2) and with the two sensor elements (5, 6) connected through by means of the sensor switching device (4), the first microphone of the microphone device is activated, in the case of a belt (1) partially unwound from the shaft (3) of the retractor (2), with one sensor element (5) remote from the shaft (3) of the retractor (2) and not connected through, and with the other sensor element (6) situated on the shaft (3) of the retractor (2) and connected through by means of the sensor switching device (4) the second microphone of the microphone device is activated, and in the case of a belt (1) at least partially unwound from the shaft of the retractor (2) and with both sensor elements (5, 6) remote from the shaft (3) of the retractor (2) and not connected through, the third microphone of the microphone device is activated.

5. The safety belt (1) according to one of Claims 1 to 4, in which the sensor switching device (4) of the service and/or monitoring device is constructed as a magnet.

6. The safety belt (1) according to one of Claims 1 to 5, in which the sensor elements (5, 6) of the service and/or monitoring device are constructed as Hall sensors.

7. The safety belt (1) according to Claim 6, in which the Hall sensors (5, 6) of the service and/or monitoring device are applied onto the surface of the belt (1), preferably within an automated manufacturing process thereof.

8. The safety belt (1) according to Claim 6 or 7, in which the Hall sensors (5, 6) of the service and/or monitoring device are constructed in two-wire technology.

9. The safety belt (1) according to one of Claims 6 to 8, in which guide lines (7, 8) of the Hall sensors (4, 5) of the service and/or monitoring device are flexible and are woven into the belt (1).

10. The safety belt (1) according to Claim 9, in which the guide lines (7, 8) of the Hall sensors (4, 5) of the service and/or monitoring device are discharged at an end fitting of the belt (1) via a cable or respectively a plug connector.

11. The safety belt (1) according to one of Claims 3 to 10, the service and/or monitoring device of which has a logic circuit, by means of which the connected-through or respectively non-connected-through state of the sensor element or respectively of the sensor elements (5, 6) is able to be detected, and the microphone corresponding to the respective switching status of the sensor element or respectively sensor elements (5, 6) is able to be activated.

## Revendications

1. Ceinture de sécurité (1) d'un véhicule automobile, qui peut être enroulée sur un arbre (3) d'un enrouleur (2) et déroulée de cet arbre (3) et présente un dispositif des service et/ou surveillance, qui présente un dispositif de capteur (4) conçu comme un dispositif de commutation de capteur (4), qui est disposé à proximité immédiate près de, sur ou dans l'arbre (3) de l'enrouleur (2), et présente au moins un élément de capteur (5, 6), qui est disposé sur la ceinture de sécurité (1), **caractérisé en ce que** au moins un élément de capteur (5, 6) peut être interconnecté au moyen du dispositif de commutation de capteur (4), quand au moins un élément de capteur (5, 6) se trouve à proximité du dispositif de commutation de capteur (4) en l'état enroulé autant que possible de la ceinture de sécurité (1) sur l'arbre (3) de l'enrouleur (2).

2. Ceinture de sécurité (1) selon la revendication 1, dont le dispositif de services et/ou surveillance est conçu comme une sécurité de positionnement de ceinture, dans laquelle sur l'élément de capteur (5, 6) non interconnecté, éloigné de l'arbre (3) de l'enrouleur (2) un signal confirmant le positionnement de la ceinture (1) peut être généré.

3. Ceinture de sécurité (1) selon la revendication 1, dont le dispositif de services et/ou surveillance est conçue comme un dispositif de microphone, avec au moins deux microphones activables séparément, qui sont disposés dans la direction longitudinale de la ceinture (1) en espacement l'un de l'autre sur la ceinture (1), dans laquelle sur l'élément de capteur (5, 6) interconnecté au moyen du dispositif de commutation de capteur (4), se trouvant sur l'arbre (3) de l'enrouleur (2), le premier microphone du dispositif de microphone est activé et sur l'élément de capteur (5, 6) non interconnecté, éloigné de l'arbre (3) de l'enrouleur (2) le deuxième microphone du dispositif de microphone est activé.

4. Ceinture de sécurité (1) selon la revendication 3, dont le dispositif de service et/ou surveillance présente trois, microphones et deux éléments de capteurs (5, 6), qui sont disposés dans la direction longitudinale de la ceinture (1) en espacement l'un par rapport à l'autre sur la ceinture (1), dans laquelle quand la ceinture (1) est enroulée sur l'arbre (3) de l'enrouleur (2) et les deux éléments de capteur (5, 6) sont interconnectés au moyen du dispositif de commutation de capteur (4), le premier microphone est activé, quand la ceinture (1) est partiellement déroulée de l'arbre (3) de l'enrouleur (2), un élément de capteur (5) éloigné de l'arbre (3) de l'enrouleur (2) est non interconnecté, et l'autre élément de capteur (6) se trouvant sur l'arbre (3) de l'enrouleur (2) est interconnecté au moyen du dispositif de commutation de capteur (4) le deuxième microphone est activé et quand la ceinture (1) est au moins partiellement déroulée de l'arbre de l'enrouleur (2) et les deux éléments de capteur (5, 6) sont non interconnecté, éloignés de l'arbre (3) de l'enrouleur (2) le troisième microphone du dispositif de microphone est activé.

5. Ceinture de sécurité (1) selon une des revendications 1 à 4, dans laquelle le dispositif de commutation de capteur (4) du dispositif de service et/ou surveillance est conçu comme un aimant.

6. Ceinture de sécurité (1) selon une des revendications 1 à 5, dans laquelle les éléments de capteur (5, 6) du dispositif de service et/ou surveillance sont conçus comme des capteurs de Hall.

7. Ceinture de sécurité (1) selon la revendication 6, dans laquelle les capteurs de Hall (5, 6) du dispositif de service et/ou surveillance sont montés sur la surface de la courroie (1), de préférence à l'intérieur d'un processus de fabrication automatisée de celle-ci.

8. Ceinture de sécurité (1) selon la revendication 6 ou 7, dans laquelle les capteurs de Hall (5, 6) du dispositif de service et/ou surveillance sont conçus selon la technique à double fil.

9. Ceinture de sécurité (1) selon une des revendications 6 à 8, dans laquelle le fil conducteur (7, 8) des capteurs de Hall (4, 5) du dispositif de service et/ou surveillance sont flexibles et tricotés dans la ceinture (1).

10. Ceinture de sécurité (1) selon la revendication 9, dans lequel les fils conducteurs (7, 8) des capteurs de Hall (4, 5) du dispositif de service et/ou surveillance sont canalisés sur une butée d'extrémité de la ceinture (1) par l'intermédiaire d'un câble ou d'un connecteur.

11. Ceinture de sécurité (1) selon une des revendications 3 à 10, dont le dispositif de service et/ou surveillance présente un circuit logique, au moyen duquel l'état connecté ou non interconnecté du ou des éléments de capteur (5, 6) peut être détecté et le microphone correspondant à l'état de commutation respectif du ou des éléments de capteur (5, 6) peut être activé.
